# EUROPEAN PATENT APPLICATION

(11) **EP 2 770 310 A2**
(43) Date of publication of application: **27.08.2014**
(21) Application number: 14155919.5
(22) Date of filing: 20.02.2014
(51) Int. Cl.: G01J 3/02, G01J 3/26, G01J 3/42, G01J 3/51

(54) **Wavelength variable interference filter, optical filter device, optical module, and electronic apparatus**

(30) Priority: 22.02.2013 JP 2013032935
(71) Applicant: Seiko Epson Corporation, Tokyo 163 (JP)
(72) Inventor: Sakashita, Tomoki, Nagano 392-8502 (JP); Shinto, Susumu, Nagano 392-8502 (JP)
(74) Representative: HOFFMANN EITLE

(57) **Abstract**

A wavelength variable interference filter includes a first drive electrode electrically connected to a first reflective film and a second drive electrode electrically connected to a second reflective film. The thickness of the first drive electrode is greater than the thickness of the first reflective film, and the thickness of the second drive electrode is greater than the thickness of the second reflective film. The first drive electrode has a first step portion having a thickness smaller than the thickness of the first reflective film in an end portion connected to the first reflective film, and the second drive electrode has a second step portion having a thickness smaller than the thickness of the second reflective film in an end portion connected to the second reflective film. The first reflective film is formed to extend from a surface of a fixed substrate to the surface of the first step portion, and the second reflective film is formed to extend from a surface of a movable substrate to the surface of the second step portion.

## Description

### BACKGROUND

### 1. Technical Field

The present invention relates to a wavelength variable interference filter, an optical filter device, an optical module, and an electronic apparatus.

### 2. Related Art

An apparatus which uses a wavelength variable interference filter and measures the spectrum of incoming light is known.

A variable interference device described in JP-A-1-94312 has a configuration in which a reflective film functions as a driving electrode and a configuration in which a reflective film functions as an electrostatic capacitance monitoring electrode.

In the structure of JP-A-1-94312, in order for the reflective film to function as the driving electrode or the electrostatic capacitance monitoring electrode, it is necessary to wire a connection electrode which is connected to the reflective film.

In order for the reflective film to have a light transmission characteristic and a light reflection characteristic, the reflective film is formed to have a thickness smaller than a thickness of the connection electrode. In order to avoid deterioration of characteristics during a manufacturing process, it is preferable that the reflective film is formed after each electrode or the wiring thereof is formed.

However, when the reflective film is formed in an overlapping manner after the connection electrode is formed, since the difference between the thickness of the connection electrode and the thickness of the reflective film is large, there is a problem in that the reflective film is not sufficiently attached on the lateral surface of the end portion of the connection electrode, and disconnection occurs.

### SUMMARY

An advantage of some aspects of the invention is to solve at least a part of the problems described above, and the invention can be implemented as the following forms or application examples.

### Application Example 1

A wavelength variable interference filter according to this application example includes a first substrate, a second substrate which is arranged to face the first substrate, a first reflective film which is provided on the first substrate, reflects a part of incoming light, and transmits a part of incoming light, a second reflective film which is provided on the second substrate and is arranged to face the first reflective film reflecting a part of incoming light and transmitting a part of incoming light, a first connection electrode which is provided on the first substrate and is electrically connected to the first reflective film on the first substrate, and a second connection electrode which is provided on the second substrate and is electrically connected to the second reflective film on the second substrate, in which the thickness of the first connection electrode is greater than the thickness of the first reflective film, the thickness of the second connection electrode is greater than the thickness of the second reflective film, the first connection electrode has a first step portion having a thickness smaller than the thickness of the first reflective film in an end portion connected to the first reflective film, the second connection electrode has a second step portion having a thickness smaller than the thickness of the second reflective film in an end portion connected to the second reflective film, the first reflective film is formed to extend from the surface of the first substrate to the surface of the first step portion, and the second reflective film is formed to extend from the surface of the second substrate to the surface of the second step portion.

With this configuration, the first reflective film is formed to extend from the surface of the first substrate to the surface of the first step portion. For this reason, the first reflective film can be sufficiently attached on the lateral surface of the end portion of the first connection electrode.

Similarly, the second reflective film is formed to extend from the surface of the second substrate to the surface of the second step portion. For this reason, the second reflective film can be sufficiently attached on the lateral surface of the end portion of the second connection electrode.

From this, it is possible to reliably provide electrical conduction between the first reflective film and the first connection electrode and electrical conduction between the second reflective film and the second connection electrode, and to improve connection reliability of wiring.

### Application Example 2

In the wavelength variable interference filter according to the above-described application example, it is preferable that the first connection electrode or the second connection electrode is formed by laminating a plurality of conductive films, and a part of the conductive film below the surface of the first connection electrode or the second connection electrode is exposed in the end portion of the first connection electrode or the second connection electrode.

With this configuration, a part of the conductive film below the surface is exposed in the end portion of the first connection electrode or the second connection electrode. Accordingly, it is possible to easily form the first step portion or the second step portion.

### Application Example 3

In the wavelength variable interference filter according to the above-described application example, it is preferable that a slope portion which has a slope having a gradually increasing thickness of the conductive film from the first step portion or the second step portion is provided, and the first reflective film or the second reflective film extends from the first step portion or the second step portion to the slope portion.

With this configuration, the slope portion which has a slope having a gradually increasing thickness of the conductive film from the first step portion or the second step portion is provided. The first reflective film or the second reflective film extends to the slope portion.

From this, it is possible to reliably provide electrical conduction between the first reflective film and the first connection electrode and electrical conduction between the second reflective film and the second connection electrode.

### Application Example 4

In the wavelength variable interference filter according to the above-described application example, the first connection electrode or the second connection electrode may be formed of a single conductive film.

With this configuration, the first connection electrode or the second connection electrode is formed of a single conductive film. For this reason, it is possible to simplify the manufacturing process of the first connection electrode or the second connection electrode.

### Application Example 5

In the wavelength variable interference filter according to the above-described application example, it is preferable that a slope portion which has a slope having a gradually increasing thickness of the conductive film from the first step portion or the second step portion is provided, and the first reflective film or the second reflective film extends from the first step portion or the second step portion to the slope portion.

With this configuration, the slope portion which has a slope having a gradually increasing thickness of the conductive film from the first step portion or the second step portion is provided. The first reflective film or the second reflective film extends to the slope portion.

From this, it is possible to reliably provide electrical conduction between the first reflective film and the first connection electrode and electrical conduction between the second reflective film and the second connection electrode.

### Application Example 6

In the wavelength variable interference filter according to the above-described application example, it is preferable that the second substrate includes a movable portion which is provided with the second reflective film, and a holding portion which is provided outside the movable portion in plan view when the second substrate is viewed in a substrate thickness direction, has a thickness smaller than the thickness of the movable portion, and retreatably holds the movable portion.

With this configuration, the second substrate includes the movable portion which is provided with the second reflective film, and the holding portion which is provided outside the movable portion, has a thickness smaller than the thickness of the movable portion, and holds the movable portion.

In this structure, the holding portion is bent by external force, thereby displacing the movable portion. This displacement causes change in the gap between the first reflective film and the second reflective film, whereby it is possible to easily form a wavelength variable interference filter in which the gap between the reflective films is variable.

### Application Example 7

A wavelength variable interference filter according to this application example includes a reflective film which reflects a part of incoming light and transmits a part of incoming light, and a connection electrode which is electrically connected to the reflective film, in which a step portion which has a thickness smaller than the thickness of the reflective film is provided in an end portion of the connection electrode connected to the reflective film, and the reflective film is in contact with the surface of the step portion of the connection electrode in an overlapping manner.

With this configuration, the reflection film is in contact with the surface of the step portion of the connection electrode in an overlapping manner. For this reason, the reflective film can be sufficiently attached on the lateral surface of the end portion of the connection electrode.

From this, it is possible to reliably provide electrical conduction between the reflective film and the connection electrode, and to improve connection reliability of wiring.

### Application Example 8

An optical filter device according to this application example includes a wavelength variable interference filter having a first substrate, a second substrate which is arranged to face the first substrate, a first reflective film which is provided on the first substrate, reflects a part of incoming light, and transmits a part of incoming light, a second reflective film which is provided on the second substrate and is arranged to face the first reflective film reflecting a part of incoming light and transmitting a part of incoming light, a first connection electrode which is provided on the first substrate and is electrically connected to the first reflective film on the first substrate, and a second connection electrode which is provided on the second substrate and is electrically connected to the second reflective film on the second substrate, and a housing which stores the wavelength variable interference filter, in which the thickness of the first connection electrode is greater than the thickness of the first reflective film, the thickness of the second connection electrode is greater than the thickness of the second reflective film, the first connection electrode has a first step portion having a thickness smaller than the thickness of the first reflective film in an end portion connected to the first reflective film, the second connection electrode has a second step portion having a thickness smaller than the thickness of the second reflective film in an end portion connected to the second reflective film, the first reflective film is formed to extend from the surface of the first substrate to the surface of the first step portion, and the second reflective film is formed to extend from the surface of the second substrate to the surface of the second step portion.

With this configuration, the first reflective film is formed to extend from the surface of the first substrate to the surface of the first step portion. For this reason, the first reflective film can be sufficiently attached on the lateral surface of the end portion of the first connection electrode.

Similarly, the second reflective film is formed to extend from the surface of the second substrate to the surface of the second step portion. For this reason, the second reflective film can be sufficiently attached on the lateral surface of the end portion of the second connection electrode.

From this, it is possible to reliably provide electrical conduction between the first reflective film and the first connection electrode and electrical conduction between the second reflective film and the second connection electrode, to improve connection reliability of wiring of the wavelength variable interference filter, and to improve reliability of the optical filter device.

Since the wavelength variable interference filter is stored in the housing, for example, it is possible to protect the wavelength variable interference filter from impact or the like during transportation. It is also possible to prevent a foreign substance from being stuck to the first reflective film and the second reflective film of the wavelength variable interference filter.

### Application Example 9

An optical module according to this application example includes a first substrate, a second substrate which is arranged to face the first substrate, a first reflective film which is provided on the first substrate, reflects a part of incoming light, and transmits a part of incoming light, a second reflective film which is provided on the second substrate and is arranged to face the first reflective film reflecting a part of incoming light and transmitting a part of incoming light, a first connection electrode which is provided on the first substrate and is electrically connected to the first reflective film on the first substrate, a second connection electrode which is provided on the second substrate and is electrically connected to the second reflective film on the second substrate, and a detection unit which detects light extracted by the first reflective film and the second reflective film, in which the thickness of the first connection electrode is greater than the thickness of the first reflective film, the thickness of the second connection electrode is greater than the thickness of the second reflective film, the first connection electrode has a first step portion having a thickness smaller than the thickness of the first reflective film in an end portion connected to the first reflective film, the second connection electrode has a second step portion having a thickness smaller than the thickness of the second reflective film in an end portion connected to the second reflective film, the first reflective film is formed to extend from the surface of the first substrate to the surface of the first step portion, and the second reflective film is formed to extend from the surface of the second substrate to the surface of the second step portion.

With this configuration, the first reflective film is formed to extend from the surface of the first substrate to the surface of the first step portion. For this reason, the first reflective film can be sufficiently attached on the lateral surface of the end portion of the first connection electrode.

Similarly, the second reflective film is formed to extend from the surface of the second substrate to the surface of the second step portion. For this reason, the second reflective film can be sufficiently attached on the lateral surface of the end portion of the second connection electrode.

From this, it is possible to reliably provide electrical conduction between the first reflective film and the first connection electrode and electrical conduction between the second reflective film and the second connection electrode, to improve connection reliability of wiring of the wavelength variable interference filter, and to improve reliability of the optical module. Therefore, it is possible to carry out light amount detection with high precision by the optical module.

### Application Example 10

An electronic apparatus according to this application example includes a wavelength variable interference filter having a first substrate, a second substrate which is arranged to face the first substrate, a first reflective film which is provided on the first substrate, reflects a part of incoming light, and transmits a part of incoming light, a second reflective film which is provided on the second substrate and is arranged to face the first reflective film reflecting a part of incoming light and transmitting a part of incoming light, a first connection electrode which is provided on the first substrate and is electrically connected to the first reflective film on the first substrate, and a second connection electrode which is provided on the second substrate and is electrically connected to the second reflective film on the second substrate, and a control unit which controls the wavelength variable interference filter, in which the thickness of the first connection electrode is greater than the thickness of the first reflective film, the thickness of the second connection electrode is greater than the thickness of the second reflective film, the first connection electrode has a first step portion having a thickness smaller than the thickness of the first reflective film in an end portion connected to the first reflective film, the second connection electrode has a second step portion having a thickness smaller than the thickness of the second reflective film in an end portion connected to the second reflective film, the first reflective film is formed to extend from the surface of the first substrate to the surface of the first step portion, and the second reflective film is formed to extend from the surface of the second substrate to the surface of the second step portion.

With this configuration, the first reflective film is formed to extend from the surface of the first substrate to the surface of the first step portion. For this reason, the first reflective film can be sufficiently attached on the lateral surface of the end portion of the first connection electrode.

Similarly, the second reflective film is formed to extend from the surface of the second substrate to the surface of the second step portion. For this reason, the second reflective film can be sufficiently attached on the lateral surface of the end portion of the second connection electrode.

From this, it is possible to reliably provide electrical conduction between the first reflective film and the first connection electrode and electrical conduction between the second reflective film and the second connection electrode, to improve connection reliability of wiring of the wavelength variable interference filter, and to improve reliability of the electronic apparatus. Therefore, the electronic apparatus can execute processing with high precision based on light extracted by the wavelength variable interference filter.

### BRIEF DESCRIPTION OF THE DRAWINGS

The invention will be described with reference to the accompanying drawings, wherein like numbers reference like elements.
Fig. 1 is a schematic view showing a configuration of a spectroscopic measurement apparatus of a first embodiment.
Fig. 2 is a plan view of a wavelength variable interference filter according to the first embodiment.
Fig. 3 is a sectional view of the wavelength variable interference filter according to the first embodiment.
Fig. 4 is an enlarged view of a B portion of Fig. 3.
Fig. 5 is a plan view when a fixed substrate of the wavelength variable interference filter according to the first embodiment is viewed from a movable substrate side.
Fig. 6 is a plan view when the movable substrate of the wavelength variable interference filter according to the first embodiment is viewed from the fixed substrate side.
Figs. 7A to 7E are explanatory views showing a manufacturing process of the fixed substrate of the wavelength variable interference filter according to the first embodiment.
Figs. 8A to 8E are explanatory views showing a manufacturing process of the movable substrate of the wavelength variable interference filter according to the first embodiment.
Fig. 9 is an explanatory view showing a bonding process of the wavelength variable interference filter according to the first embodiment.
Fig. 10 is a plan view showing a modification example of a shape of a first reflective film in the first embodiment.
Figs. 11A to 11D are schematic sectional views showing a modification example of a shape of a first drive electrode in the first embodiment.
Figs. 12A to 12C are schematic sectional views showing a modification example of the shape of the first drive electrode in the first embodiment.
Fig. 13 is a sectional view showing a schematic configuration of an optical filter device in a second embodiment.
Fig. 14 is a schematic view showing a configuration of a colorimetric apparatus as an electronic apparatus in a third embodiment.
Fig. 15 is a schematic view showing a configuration of a gas detection apparatus as an electronic apparatus in a fourth embodiment.
Fig. 16 is a block diagram showing a control system of the gas detection apparatus as an electronic apparatus in the fourth embodiment.
Fig. 17 is a schematic view showing a configuration of a food analysis apparatus as an electronic apparatus in a fifth embodiment.
Fig. 18 is a schematic view showing a configuration of a spectroscopic camera as an electronic apparatus in a sixth embodiment.

### DESCRIPTION OF EXEMPLARY EMBODIMENTS

Hereinafter, an embodiment of the invention will be described referring to the drawings. In the respective drawings of the following description, the dimensional ratio of each member is appropriately changed so as to allow each member to be of recognizable size.

### First Embodiment

### Configuration of Spectroscopic Measurement Apparatus

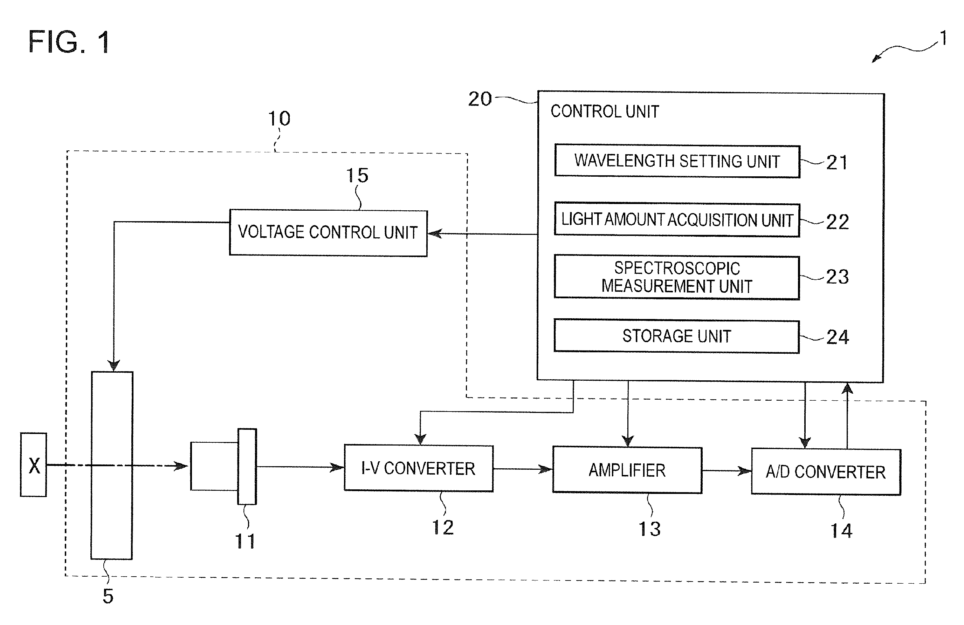

Fig. 1 is a schematic view showing the configuration of a spectroscopic measurement apparatus according to a first embodiment of the invention.

A spectroscopic measurement apparatus 1 is an electronic apparatus according to the invention, and is an apparatus which measures the spectrum of light to be measured on the basis of light to be measured reflected by an object X to be measured. In this embodiment, although an example where light to be measured reflected by the object X to be measured is measured will be described, when a luminous body, such as a liquid crystal panel, is used as an object X to be measured, for example, light emitted from the luminous body may be used as the light to be measured.

As shown in Fig. 1, the spectroscopic measurement apparatus 1 includes an optical module 10 and a control unit 20.

### Configuration of Optical Module

The optical module 10 includes a wavelength variable interference filter 5, a detector 11, an I-V converter 12, an amplifier 13, an A/D converter 14, and a voltage control unit 15.

The detector 11 receives light transmitted through the wavelength variable interference filter 5 of the optical module 10, and outputs a detection signal (current) according to the intensity of received light.

The I-V converter 12 converts the detection signal input from the detector 11 to a voltage value, and outputs the voltage value to the amplifier 13.

The amplifier 13 amplifies a voltage (detection voltage) according to the detection signal input from the I-V converter 12.

The A/D converter 14 converts the detection voltage (analog signal) input from the amplifier 13 to a digital signal, and outputs the digital signal to the control unit 20.

The voltage control unit 15 applies a voltage to a drive electrode (described below) of the wavelength variable interference filter 5. The wavelength variable interference filter 5 transmits light having a target wavelength according to the applied voltage.

### Configuration of Wavelength Variable Interference Filter

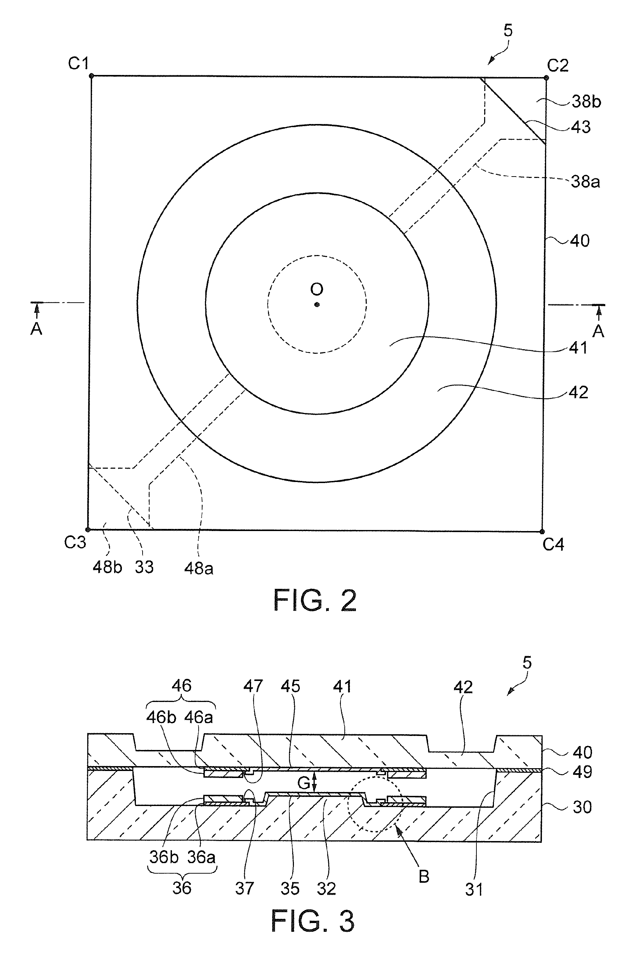

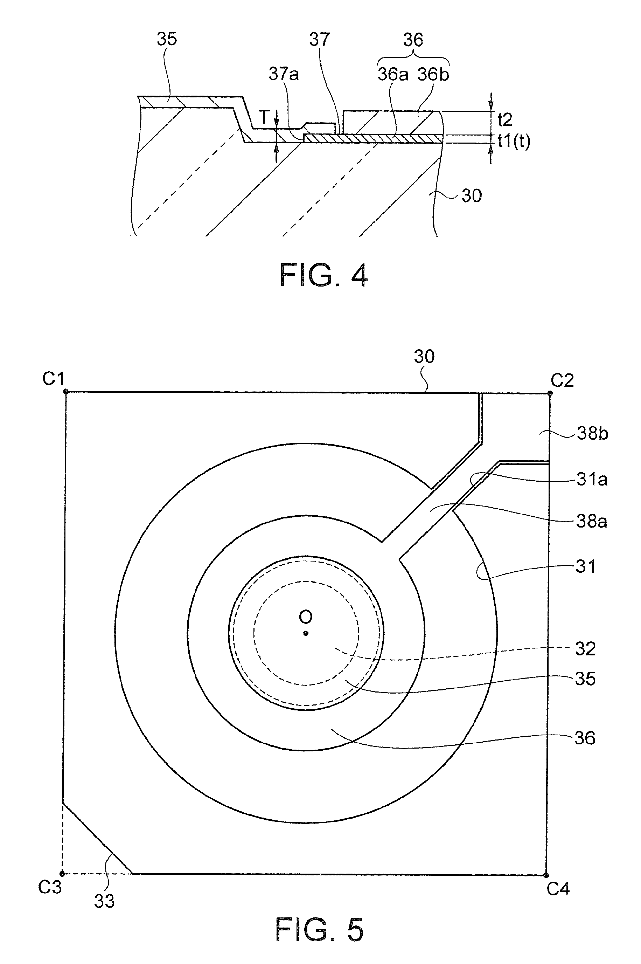

Fig. 2 is a plan view of the wavelength variable interference filter according to this embodiment, and Fig. 3 is a sectional view taken along the line II-II of Fig. 2. Fig. 4 is an enlarged view of a B portion of Fig. 3.

The wavelength variable interference filter 5 of this embodiment is a so-called Fabry-Perot etalon. The wavelength variable interference filter 5 includes a fixed substrate (first substrate) 30 and a movable substrate (second substrate) 40. The fixed substrate 30 and the movable substrate 40 are formed of, for example, various kinds of glass, such as quartz glass, soda-lime glass, crystalline glass, lead glass, potassium glass, borosilicate glass, and non-alkali glass, crystal, silicon, or the like.

The fixed substrate 30 and the movable substrate 40 are bonded together by, for example, a bonding film 49 made of a plasma polymerized film or the like primarily containing siloxane, and are integrated as a single body.

A first reflective film 35 is provided on the fixed substrate 30, a second reflective film 45 is provided on the movable substrate 40, and the first reflective film 35 and the second reflective film 45 are arranged to face each other through a gap G between the reflective films. The wavelength variable interference filter 5 is provided with an electrostatic actuator which is used to change the amount of the gap G between the reflective films. The electrostatic actuator is constituted by a first drive electrode 36 (first connection electrode) provided on the fixed substrate 30 and a second drive electrode 46 (second connection electrode) provided on the movable substrate 40. A pair of first drive electrode 36 and second drive electrode 46 are arranged to face each other through a gap between the electrodes, and function as an electrostatic actuator. The amount of the gap between the electrodes may be greater or smaller than the amount of the gap G between the reflective films.

The first drive electrode 36 is formed in a ring shape, and has a structure in which an underlayer is a Cr film 36a, and an Au film 36b as an electrode layer is laminated on the Cr film 36a. For example, the thickness t1 of the Cr film 36a is about 10 nm, and the thickness t2 of the Au film 36b is 100 nm to 200 nm. Instead of the Cr film as the underlayer, a film of Ti, NiCr, TiW, or the like may be used.

As shown in Fig. 4, in the first drive electrode 36, the Au film 36b on the entire circumference of the outer edge portion of the inner circumference of the ring-shaped first drive electrode 36 is removed to expose a part of the Cr film 36a, whereby a first step portion 37 is formed.

The first reflective film 35 is in contact with the surface of the first step portion 37 of the exposed Cr film 36a in an overlapping manner. The first reflective film 35 is formed of Ag or an alloy primarily containing Ag, and the thickness T of the first reflective film 35 is 10 nm to 80 nm.

As shown in Fig. 4, the thickness T of the first reflective film 35 and the dimension from the surface of the fixed substrate 30 to the first step portion 37, that is, a step dimension t have a relationship of T > t. In this embodiment, the step dimension t and the thickness t1 of the Cr film 36a are equal to each other, and t = t1.

In this way, the first reflective film 35 and the first drive electrode 36 are electrically connected together, thereby achieving electrical conduction. Since the thickness T of the first reflective film 35 is greater than the step dimension t, the thin first reflective film 35 can be sufficiently attached on a lateral surface 37a of the end portion of the first drive electrode 36 even if the first reflective film 35 is formed from above the first drive electrode 36, and there is no concern about disconnection.

Similarly to the first drive electrode 36, the second drive electrode 46 is formed in a ring shape, and has a structure in which an underlayer is a Cr film 46a, and an Au film 46b as an electrode layer is laminated on the Cr film 46a. The Cr film 46a and the Au film 46b are formed to have the same thickness as the first drive electrode 36.

In the second drive electrode 46, the Au film 46b on the entire circumference of the outer edge portion of the inner circumference of the ring-shaped second drive electrode 46 is removed to expose a part of the Cr film 46a, whereby the second step portion 47 is formed.

The second reflective film 45 is in contact with the surface of the second step portion 47 of the exposed Cr film 46a in an overlapping manner. The second reflective film 45 is formed of Ag or an alloy primarily containing Ag, and similarly to the first reflective film 35, the thickness T of the second reflective film 45 is 10 nm to 80 nm.

Though not shown, the thickness T of the second reflective film 45 and the dimension from the surface of the movable substrate 40 to the second step portion 47, that is, a step dimension t have a relationship of T > t. In this embodiment, the step dimension t and the thickness t1 of the Cr film 46a are equal to each other, and t = t1.

In this way, the second reflective film 45 and the second drive electrode 46 are electrically connected together, thereby achieving electrical conduction. Since the thickness T of the second reflective film 45 is greater than the step dimension t, the thin second reflective film 45 can be sufficiently attached on the lateral surface of the end portion of the second drive electrode 46 even if the second reflective film 45 is formed from above the second drive electrode 46, and there is no concern about disconnection.

The above-described wavelength variable interference filter 5 has a configuration in which the first reflective film 35 and the first drive electrode 36, and the second reflective film 45 and the second drive electrode 46 are electrically connected together to allow static electricity charged on the first reflective film 35 and the second reflective film 45 to escape outside.

### Configuration of Fixed Substrate

Fig. 5 is a plan view when the fixed substrate 30 is viewed from the movable substrate 40 side.

The fixed substrate 30 is formed to have a thickness enough to prevent the fixed substrate 30 from being bent due to electrostatic attraction by the electrostatic actuator or internal stress of a film member formed on the fixed substrate 30.

As shown in Fig. 5, the fixed substrate 30 includes a concave portion 31 formed by, for example, etching or the like and a convex portion 32 in which the first reflective film 35 is arranged. A notch portion 33 is provided in a part (vertex C3) of the outer edge of the fixed substrate 30, and an electrode pad 48b of the movable substrate 40 (described below) is exposed to the surface of the wavelength variable interference filter 5 from the notch portion 33.

The concave portion 31 is formed in a ring shape centering on a filter center point O of the fixed substrate 30 in plan view in the thickness direction of the fixed substrate 30. The convex portion 32 is formed to protrude from the center portion of the concave portion 31 toward the movable substrate 40 in plan view in the thickness direction of the fixed substrate 30.

A bottom surface of the concave portion 31 becomes an electrode installation surface on which the first drive electrode 36 of the electrostatic actuator is arranged. A protruding front end surface of the convex portion 32 becomes a reflective film installation surface on which the first reflective film 35 is arranged.

The fixed substrate 30 is provided with an electrode lead-out groove 31a which extends from the concave portion 31 toward a vertex C2 of the fixed substrate 30. The electrode lead-out groove 31a is formed to have the same depth as the concave portion 31.

The first drive electrode 36 which is provided along a virtual circle centering on the filter center point O is provided on the bottom surface of the concave portion 31. The first drive electrode 36 is formed concentrically to the convex portion 32.

The fixed substrate 30 is provided with a lead-out electrode 38a which extends from the outer edge of the first drive electrode 36 to the vertex C2 along the electrode lead-out groove 31a toward the vertex C2. A front end portion of the lead-out electrode 38a forms an electrode pad 38b which is connected to the voltage control unit 15.

The first drive electrode 36, the lead-out electrode 38a, and the electrode pad 38b have a structure in which the underlayer is the Cr film 36a, and the Au film 36b as an electrode layer is laminated on the Cr film 36a.

If the Au film is used as an electrode layer, since terminal connectivity when connecting wavelength variable interference filter 5 to the voltage control unit 15 is satisfactory, and conductivity is satisfactory, it is possible to suppress an increase in electrical resistance. The Cr film having high adhesion to Au and high adhesion to a glass substrate (fixed substrate 30) is used as the underlayer, whereby it is possible to prevent separation of the first drive electrode 36, the lead-out electrode 38a, and the electrode pad 38b.

In this embodiment, although a two-layered electrode in which the underlayer is the Cr film and the electrode layer is the Au film has been illustrated, a different metal film (Al or the like) which has adhesion to the glass substrate and has conductivity may be used in a single layer.

An insulating film which ensures insulation between the first drive electrode 36 and the second drive electrode 46 may be laminated on the first drive electrode 36.

In this embodiment, although a configuration in which the single first drive electrode 36 is provided on the bottom surface of the concave portion 31 is described, for example, a configuration (dual electrode configuration) in which two electrodes are provided to become a concentric circle centering on the filter center point O, or the like may be made.

The convex portion 32 is substantially formed in a columnar shape coaxially to the concave portion 31, and includes a reflective film installation surface facing the movable substrate 40.

The first reflective film 35 is provided to extend from the reflective film installation surface to the bottom surface of the concave portion 31. As the first reflective film 35, for example, a metal film, such as Ag, or an alloy film, such as Ag alloy, is preferably used.

The first reflective film 35 is connected to overlap the entire circumference of the inner edge portion of the first drive electrode 36, and the first reflective film 35 and the first drive electrode 36 are electrically connected together, thereby achieving electrical conduction.

### Configuration of Movable Substrate

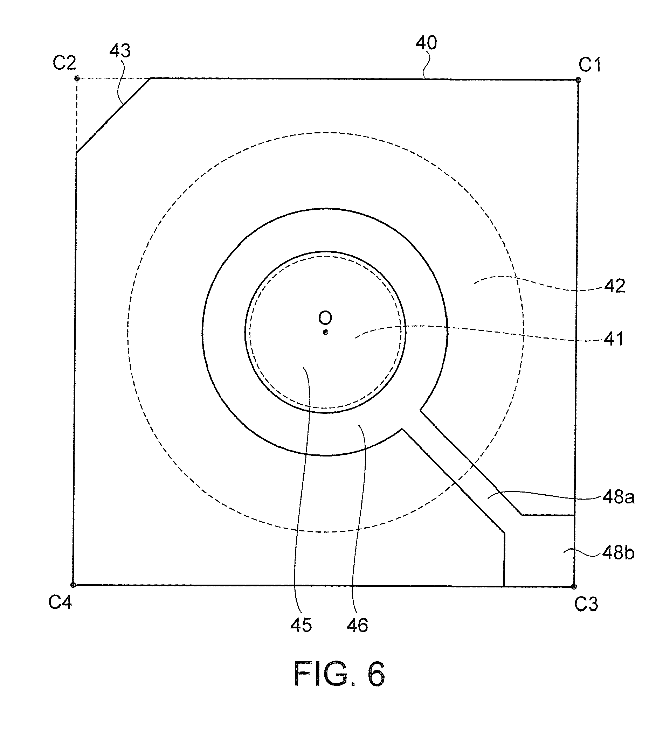

Fig. 6 is a plan view when the movable substrate 40 is viewed from the fixed substrate 30 side. Vertexes C1, C2, C3, and C4 of the movable substrate 40 in Fig. 6 correspond to the vertexes C1, C2, C3, and C4 of the fixed substrate 30 shown in Fig. 5.

As shown in Figs. 3 and 6, in plan view in the thickness direction of the movable substrate 40, the movable substrate 40 includes a circular movable portion 41 centering on the filter center point O, and a holding portion 42 which is coaxial to the movable portion 41 and holds the movable portion 41.

As shown in Fig. 6, the movable substrate 40 is provided with a notch portion 43 at the vertex C2, and as described above, the electrode pad 38b of the fixed substrate 30 is exposed from the notch portion 43.

The movable portion 41 is formed to have a thickness greater than the holding portion 42. In plan view in the thickness direction of the movable substrate 40, the movable portion 41 is formed to have a diameter greater than at least the diameter of the outer edge of the reflective film installation surface. The second reflective film 45 and the second drive electrode 46 are provided on the surface of the movable portion 41 facing the fixed substrate 30.

Similarly to the fixed substrate 30, an anti-reflection film may be formed on the surface opposite to the surface of the movable portion 41 facing the fixed substrate 30.

As shown in Fig. 6, in plan view in the thickness direction of the movable substrate 40, the second drive electrode 46 is provided in a region facing the first drive electrode 36 outside the second reflective film 45.

The second drive electrode 46 is provided with a lead-out electrode 48a which extends toward the vertex C3. A front end portion of the lead-out electrode 48a forms an electrode pad 48b which is connected to the voltage control unit 15.

In the electrode configuration as described above, as shown in Fig. 3, an electrostatic actuator is formed by an arc region where the first drive electrode 36 and the second drive electrode 46 overlap each other.

The second drive electrode 46, the lead-out electrode 48a, and the electrode pad 48b have a structure in which the underlayer is the Cr film 46a, and the Au film 46b as an electrode layer is laminated on the Cr film 46a.

When the Au film is used as an electrode layer, since terminal connectivity when connecting the wavelength variable interference filter 5 to the voltage control unit 15 is satisfactory, and conductivity is satisfactory, it is possible to suppress an increase in electrical resistance. Cr which has high adhesion to Au and adhesion to a glass substrate (movable substrate 40) is used as the underlayer, whereby it is possible to prevent separation of the second drive electrode 46, the lead-out electrode 48a, and the electrode pad 48b.

In this embodiment, although a two-layered electrode in which the underlayer is the Cr film and the electrode layer is the Au film has been illustrated, a different metal film (Al or the like) which has adhesion to the glass substrate and has conductivity may be used in a single layer.

An insulating film which ensures insulation between the first drive electrode 36 and the second drive electrode 46 may be laminated on the second drive electrode 46.

In this embodiment, although a configuration in which the single second drive electrode 46 is provided has been described, for example, a configuration (dual electrode configuration) in which two electrodes are provided to become a concentric circle centering on the filter center point O may be made.

The second reflective film 45 is made of the same material as the first reflective film 35. Accordingly, in this embodiment, the second reflective film 45 is preferably formed of an Ag film or an Ag alloy film.

The second reflective film 45 is connected to overlap the entire circumference of the inner edge portion of the second drive electrode 46, and the second reflective film 45 and the second drive electrode 46 are electrically connected together, thereby achieving electrical conduction.

The holding portion 42 is a diaphragm which surrounds the periphery of the movable portion 41, and is formed to have a thickness smaller than the movable portion 41. The holding portion 42 is bent more easily than the movable portion 41, is displaced by slight electrostatic attraction, and holds the movable portion 41 to be retreated toward the fixed substrate 30. At this time, since the movable portion 41 has a thickness greater than the holding portion 42, and increases in rigidity, even when the holding portion 42 is stretched toward the fixed substrate 30 by electrostatic attraction, change in the shape of the movable portion 41 is suppressed. Accordingly, bending of the second reflective film 45 provided in the movable portion 41 is suppressed, making it possible to maintain the first reflective film 35 and the second reflective film 45 in a parallel state.

In this embodiment, although the holding portion 42 of the diaphragm is illustrated, the invention is not limited thereto, and for example, a configuration in which a beam-like holding portion is provided at an equal angle interval centering on the filter center point O, or the like may be used.

### Configuration of Voltage Control Unit

Returning to Fig. 1, the voltage control unit 15 is connected to the electrode pads 38b and 48b of the wavelength variable interference filter 5.

When a voltage command signal corresponding to a wavelength to be measured is received from the control unit 20, the voltage control unit 15 applies a corresponding voltage between the electrode pads 38b and 48b. Accordingly, electrostatic attraction based on the applied voltage is generated in the electrostatic actuator (between the first drive electrode 36 and the second drive electrode 46) of the wavelength variable interference filter 5, and the movable portion 41 is displaced toward the fixed substrate 30 to change the amount of the gap G between the reflective films.

### Configuration of Control Unit

For example, the control unit 20 is constituted by combining a CPU, a memory, and the like, and controls the overall operation of the spectroscopic measurement apparatus 1. As shown in Fig. 1, the control unit 20 includes a wavelength setting unit 21, a light amount acquisition unit 22, and a spectroscopic measurement unit 23.

The control unit 20 includes a storage unit 24 which stores various kinds of data, and the storage unit 24 stores V-λ (voltage-wavelength) data for controlling the electrostatic actuator.

V-λ data is data which represents the relationship between the voltage (V) to be applied to the electrostatic actuator and the peak wavelength (λ) of light transmitting through the wavelength variable interference filter 5.

The wavelength setting unit 21 sets a target wavelength of light to be extracted by the wavelength variable interference filter 5, and also reads a target voltage value corresponding to the set target wavelength from V-λ data stored in the storage unit 24. The wavelength setting unit 21 outputs a control signal to the effect of applying the read target voltage value to the voltage control unit 15. Accordingly, the voltage of the target voltage value is applied from the voltage control unit 15 to the electrostatic actuator.

The light amount acquisition unit 22 acquires the amount of light having the target wavelength transmitting through the wavelength variable interference filter 5 on the basis of the amount of light acquired by the detector 11.

The spectroscopic measurement unit 23 measures a spectral characteristic of light to be measured on the basis of the amount of light acquired by the light amount acquisition unit 22.

As a spectroscopic measurement method in the spectroscopic measurement unit 23, for example, there is a method which measures a spectroscopic spectrum with the amount of light detected by the detector 11 for the wavelength to be measured as the amount of light of the wavelength to be measured, or a method which estimates a spectroscopic spectrum on the basis of the amount of light having a plurality of wavelengths to be measured.

As a method of estimating a spectroscopic spectrum, for example, a measurement spectrum matrix with the amount of light for a plurality of wavelengths to be measured as matrix elements is produced, and a predetermined transformation matrix is applied to the measurement spectrum matrix to estimate a spectroscopic spectrum of light to be measured. In this case, a plurality of kinds of sample light with a known spectroscopic spectrum are measured by the spectroscopic measurement apparatus 1, and a transformation matrix is set such that the deviation between a matrix in which a transformation matrix is applied to a measurement spectrum matrix produced on the basis of the amount of light obtained by measurement and a known spectroscopic spectrum is minimized.

### Method of Manufacturing Wavelength Variable Interference Filter

Next, a method of manufacturing the above-described wavelength variable interference filter 5 will be described referring to the drawings. Manufacturing of the wavelength variable interference filter 5 is composed of a manufacturing process of a fixed substrate, a manufacturing process of a movable substrate, and a bonding process of substrates.

### Manufacturing Process of Fixed Substrate

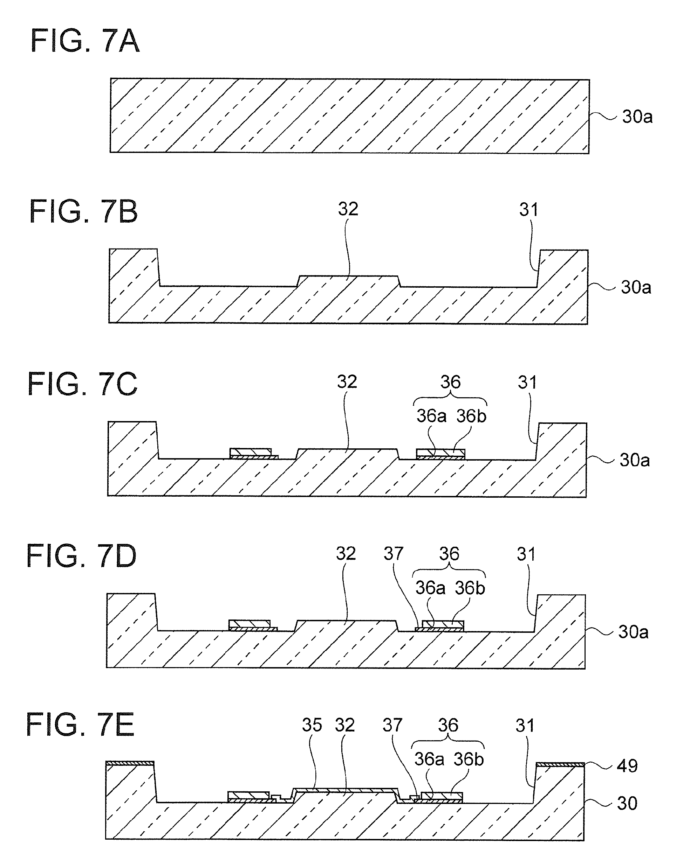

Figs. 7A to 7E are explanatory views showing a manufacturing process of a fixed substrate.

First, as shown in Fig. 7A, a first base material 30a formed of a quartz glass substrate or the like as a material of the fixed substrate 30 is prepared, and both surfaces of the first base material 30a are subjected to precision polishing until surface roughness Ra becomes equal to or smaller than 1 nm.

Next, as shown in Fig. 7B, the substrate surface of the first base material 30a is processed by etching.

Specifically, resist is coated on the substrate surface of the first base material 30a, and the coated resist is exposed and developed by a photolithography method to pattern an opening for forming the concave portion 31 and the convex portion 32.

For example, both surfaces of the first base material 30a are subjected to wet etching using a hydrofluoric acid-based solution. At this time, etching up to the top surface of the convex portion 32 is performed. Thereafter, an opening for etching the concave portion 31 at a predetermined depth is patterned with resist, and wet etching is performed.

Accordingly, as shown in Fig. 7B, the first base material 30a in which the exterior shape of the fixed substrate 30 is determined is formed.

Next, an electrode material which forms the first drive electrode 36, the lead-out electrode 38a, and the electrode pad 38b is formed in the concave portion 31 of the first base material 30a by a vapor deposition method, a sputtering method, or the like. After the Cr film 36a is formed as the underlayer, the Au film 36b is formed as the electrode layer. Patterning is performed using a photolithography method, whereby, as shown in Fig. 7C, the first drive electrode 36, the lead-out electrode 38a, and the electrode pad 38b are formed.

Etching of the Au film 36b is performed using a mixture of iodine and potassium iodide, and etching of the Cr film 36a is performed using an aqueous solution of ceric ammonium nitrate.

In Figs. 7A to 7E, the lead-out electrode 38a and the electrode pad 38b are not shown.

Thereafter, resist is coated on the first base material 30a, and an opening for etching a part of the Au film 36b is patterned.

As shown in Fig. 7D, a part of the Au film 36b is etched and deleted using a mixture of iodine and potassium iodide. In this way, a part of the Cr film 36a is exposed to form the first step portion 37 in the first drive electrode 36. The thickness of the Cr film 36a becomes the step dimension of the first step portion 37. Accordingly, it is possible to easily form the first step portion 37.

Next, as shown in Fig. 7E, the first reflective film 35 extends from the top surface of the convex portion 32 to the bottom surface of the concave portion 31, and is formed to overlap the surface of the first step portion 37 of the first drive electrode 36.

In this embodiment, an Ag film or an Ag alloy film is used as the first reflective film 35. When an Ag film or an Ag alloy film is used as the first reflective film 35, the film layer of the first reflective film 35 is formed in the concave portion 31 of the first base material 30a by a vacuum vapor deposition method or a sputtering method. Thereafter, the shape of the first reflective film 35 is formed using a photolithography method. Etching of an Ag film or an Ag alloy film is performed using an aqueous solution of phosphoric-nitric-acetic acid.

Since the dimension from the fixed substrate 30 to the surface of the first step portion 37 is smaller than the thickness of the first reflective film 35, the first reflective film 35 is formed on the lateral surface of the first step portion 37, thereby preventing disconnection.

After the first drive electrode 36 is formed, since there is a process for forming the first reflective film 35, it is possible to form the first reflective film 35 without being subjected to a burden, such as a chemical in the process, in the first reflective film 35. From this, it is possible to decrease a burden, such as damage to the first reflective film 35 in the process.

The bonding film 49 made of a plasma polymerized film or the like primarily containing siloxane is formed on the top surface (the surface in contact with the movable substrate 40) of the first base material 30a. The bonding film 49 is formed by, for example, a plasma CVD method or the like. It is preferable that the thickness of the bonding film 49 is, for example, 10 nm to 1000 nm.

In this way, the fixed substrate 30 is manufactured.

### Manufacturing Process of Movable Substrate

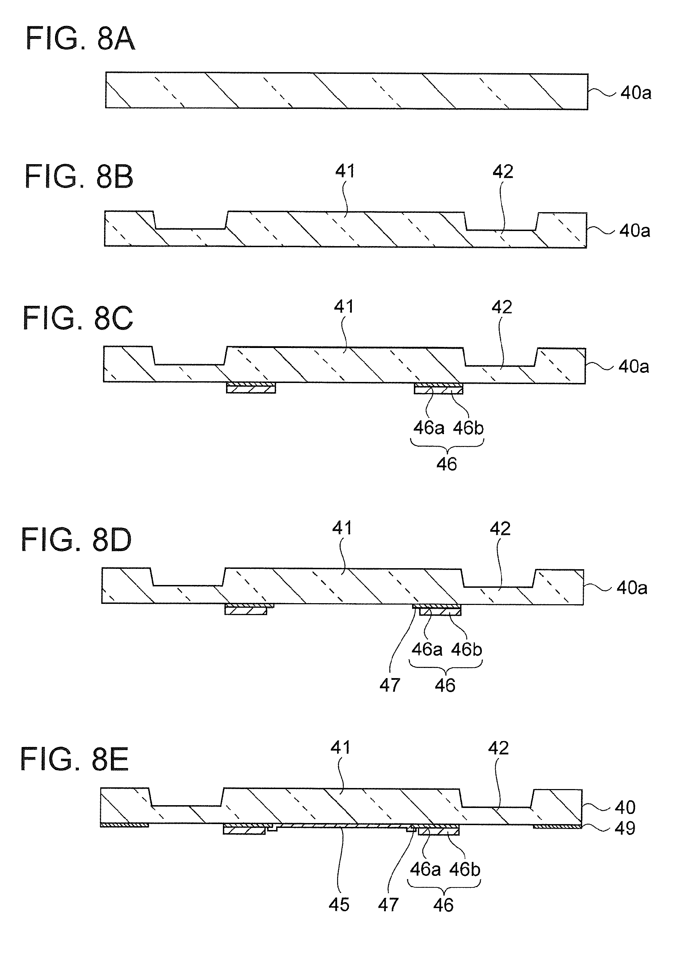

Next, a manufacturing process of a movable substrate will be described. Figs. 8A to 8E are diagrams showing a manufacturing process of a movable substrate.

First, as shown in Fig. 8A, a second base material 40a which is formed of a quartz glass substrate or the like as a material of the movable substrate 40 is prepared, and both surfaces of the second base material 40a are subjected to precision polishing until surface roughness Ra becomes equal to or smaller than 1 nm.

Resist is coated on the entire surface of the second base material 40a, and the coated resist is exposed and developed by a photolithography method to pattern a location where the holding portion 42 is formed.

Next, similarly to the first base material 30a, the second base material 40a is subjected to wet etching using a hydrofluoric acid-based solution, whereby, as shown in Fig. 8B, the movable portion 41 and the holding portion 42 are formed. Accordingly, the second base material 40a in which the substrate shape of the movable substrate 40 is determined is manufactured.

Next, an electrode material which forms the second drive electrode 46, the lead-out electrode 48a, and the electrode pad 48b of the second base material 40a is formed using a vapor deposition method, a sputtering method, or the like. After the Cr film 46a is formed as the underlayer, the Au film 46b is formed as the electrode layer. Patterning is performed using a photolithography method, whereby, as shown in Fig. 8C, the second drive electrode 46, the lead-out electrode 48a, and the electrode pad 48b are formed.

Etching of the Au film 46b is performed using a mixture of iodine and potassium iodide, and etching of the Cr film 46a is performed using an aqueous solution of ceric ammonium nitrate.

In Figs. 8A to 8E, the lead-out electrode 48a and the electrode pad 48b are not shown.

Thereafter, resist is coated on the second base material 40a, and an opening for etching a part of the Au film 46b is patterned.

As shown in Fig. 8D, a part of the Au film 46b is etched and deleted using a mixture of iodine and potassium iodide. In this way, a part of the Cr film 46a is exposed to form the second step portion 47 in the second drive electrode 46. The thickness of the Cr film 46a becomes the step dimension of the second step portion 47. Accordingly, it is possible to easily form the second step portion 47.

Next, as shown in Fig. 8E, the second reflective film 45 is formed from the center of the movable substrate 40 to overlap the surface of the second step portion 47 of the second drive electrode 46.

In this embodiment, an Ag film or an Ag alloy film is used as the second reflective film 45. When an Ag film or an Ag alloy film is used as the second reflective film 45, the film layer of the second reflective film 45 is formed on the movable substrate 40 by a vacuum vapor deposition method or a sputtering method. Thereafter, the shape of the second reflective film 45 is formed using a photolithography method. Etching of an Ag film or an Ag alloy film is performed using an aqueous solution of phosphoric-nitric-acetic acid.

Since the dimension from the movable substrate 40 to the surface of the second step portion 47 is smaller than the thickness of the second reflective film 45, the second reflective film 45 is formed on the lateral surface of the second step portion 47, thereby preventing disconnection.

After the second drive electrode 46 is formed, since there is a process for forming the second reflective film 45, it is possible to form the second reflective film 45 without being subject to a burden, such as a chemical in the process, in the second reflective film 45. From this, it is possible to decrease a burden, such as damage to the second reflective film 45 in the manufacturing process.

The bonding film 49 made of a plasma polymerized film or the like primarily containing siloxane is formed on the top surface (the surface in contact with the fixed substrate 30) of the second base material 40a. The bonding film 49 is formed by, for example, a plasma CVD method or the like. It is preferable that the thickness of the bonding film 49 is, for example, 10 nm to 1000 nm.

In this way, the movable substrate 40 is manufactured.

### Bonding Process of Substrates

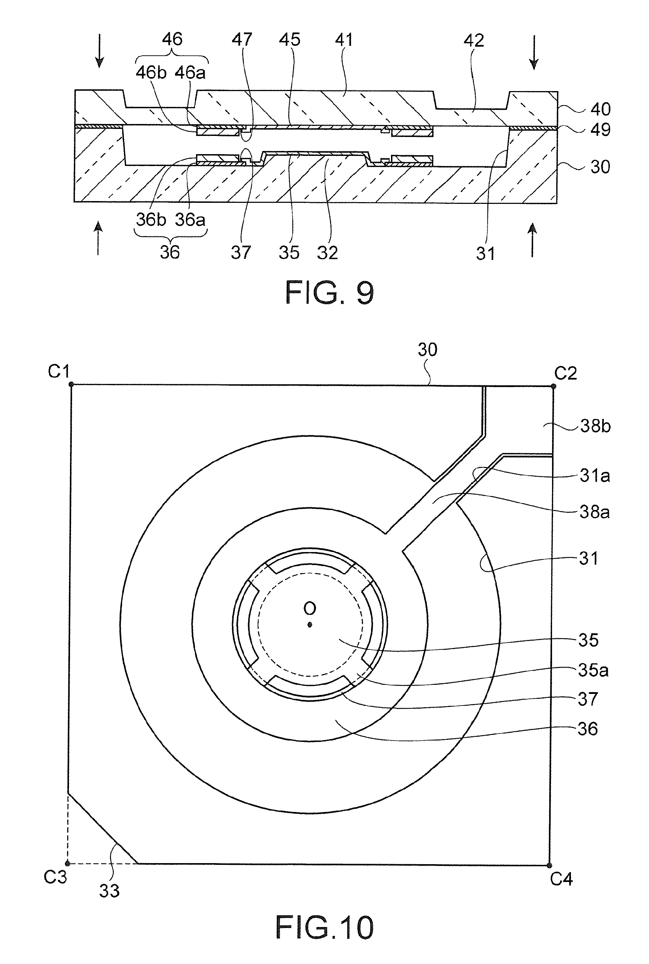

Next, a bonding process of substrates will be described. Fig. 9 is an explanatory view showing a bonding process of a fixed substrate and a movable substrate.

First, in order to give activation energy to the bonding film 49 of the fixed substrate 30 and the movable substrate 40, O₂ plasma treatment, N₂ plasma treatment, or UV treatment is performed.

After activation energy is given to the plasma polymerized film, alignment adjustment of the fixed substrate 30 and the movable substrate 40 is performed, the fixed substrate 30 and the movable substrate 40 are superimposed through the bonding film 49, and a load is applied to the bonded portion. Accordingly, the fixed substrate 30 and the movable substrate 40 are bonded together.

Through the above-described process, the wavelength variable interference filter 5 is manufactured.

### Functional Effects of First Embodiment

As described above, in the wavelength variable interference filter 5 according to this embodiment, the first reflective film 35 is formed to extend from the surface of the fixed substrate 30 to the surface of the first step portion 37 of the first drive electrode (first connection electrode) 36. That is, the first reflective film 35 is formed to cover the first step portion 37 of the first drive electrode (first connection electrode) 36 having a step smaller than the thickness of the first reflective film 35. For this reason, the first reflective film 35 can be sufficiently attached on the lateral surface 37a of the end portion of the first drive electrode 36.

Similarly to the second reflective film 45, the second reflective film 45 is formed to extend from the surface of the movable substrate 40 to the surface of the second step portion 47 of the second drive electrode (second connection electrode) 46. That is, the second reflective film 45 is formed to cover the second step portion 47 of the second drive electrode (second connection electrode) 46 having a step smaller than the thickness of the second reflective film 45. For this reason, the second reflective film 45 can be sufficiently attached on the lateral surface of the end portion of the second drive electrode 46.

From this, it is possible to reliably provide electrical conduction between the first reflective film 35 and the first drive electrode 36 and electrical conduction between the second reflective film 45 and the second drive electrode 46, and to improve connection reliability of wiring.

Since the optical module 10 according to this embodiment includes the wavelength variable interference filter 5 which improves connection reliability of wiring, it is possible to improve reliability of the optical module 10.

Since the spectroscopic measurement apparatus 1 as an electronic apparatus includes the wavelength variable interference filter 5 which improves connection reliability of wiring, it is possible to improve reliability of the spectroscopic measurement apparatus 1.

### Modification Example of Connection State of Drive Electrode and Reflective Film

Next, a modification example of the connection state of the drive electrode (first drive electrode and second drive electrode) and the reflective film (first reflective film and second reflective film) in the wavelength variable interference filter 5 will be described. Although the drive electrode and the reflective film are provided on each of the fixed substrate 30 and the movable substrate 40, here, the fixed substrate 30 side will be described. The same parts as those in the first embodiment are represented by the same reference numerals, and description thereof will not be repeated.

Fig. 10 is a plan view showing a modification example of the shape of the first reflective film in the first embodiment.

In this modification example, the shape of the first reflective film is different from that in the first embodiment.

The first reflective film 35 formed on the fixed substrate 30 has a plurality of extended portions 35a which are formed to extend from the outer edge, and each extended portion 35a is in contact with the first step portion 37 of the first drive electrode 36.

In this way, electrical conduction with the first drive electrode 36 may be provided using the first reflective film 35 having the above-described shape.

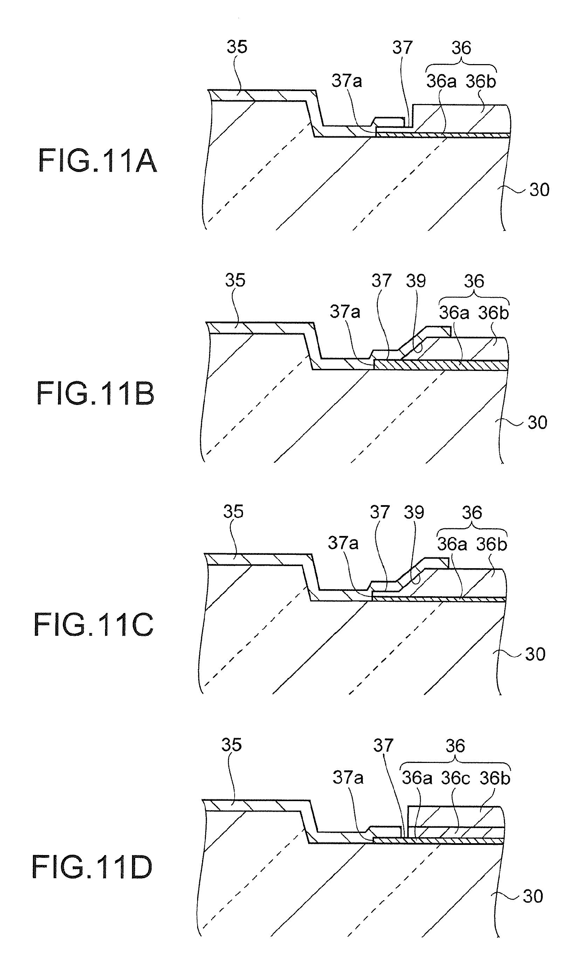

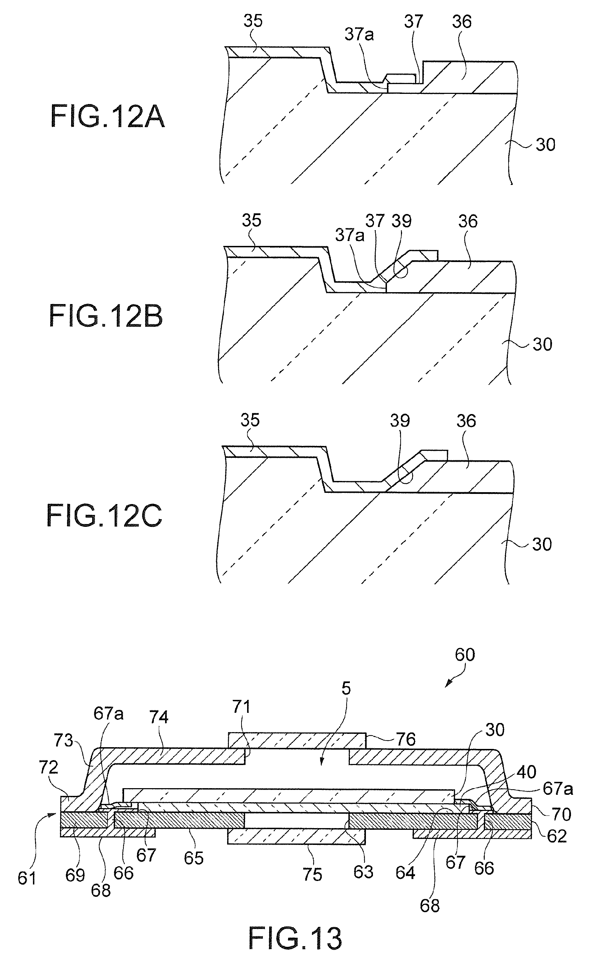

Figs. 11A to 11D are schematic sectional views showing a modification example of the shape of the first drive electrode in the first embodiment. Here, a modification example of the shape of the first drive electrode will be described. The following drawings (Figs. 11A to 11D and 12A to 12C) are diagrams corresponding to Fig. 4 of the first embodiment.

As shown in Fig. 11A, the first drive electrode 36 is formed of the Cr film 36a of the underlayer and the Au film 36b of the electrode layer, and a part of the Au film at the outer edge is removed to form the first step portion 37. In the first step portion 37, the Cr film 36a and the partially removed Au film 36b are provided, and the Au film 36b is exposed on the surface. The exposed Au film 36b is in contact with the first reflective film 35.

For this reason, since there is no case where the Au film 36b is oxidized to form an insulator, compared to a case in which the Cr film is exposed in the first embodiment, it is possible to ensure reliable electrical connection to the first reflective film 35.

As shown in Fig. 11B, in the first drive electrode 36, the Cr film 36a of the underlayer is exposed to form the first step portion 37, and the Au film 36b of the electrode layer includes a slope portion 39 which has a slope having a gradually increasing thickness of the Au film 36b from the first step portion 37.

The first reflective film 35 extends from the first step portion 37 to the slope portion 39 and is in contact with the first drive electrode 36.

Accordingly, it is possible to increase the contact area of the first drive electrode 36 and the first reflective film 35, and to ensure reliable electrical connection to the first reflective film 35.

As shown in Fig. 11C, a part of the Au film at the outer edge of the first drive electrode 36 is removed to form the first step portion 37. In the first step portion 37, the Cr film 36a and the partially removed Au film 36b are provided, and the Au film 36b is exposed on the surface. The Au film 36b of the electrode layer includes a slope portion 39 which has a slope having a gradually increasing thickness of the Au film 36b from the first step portion 37.

The first reflective film 35 extends from the first step portion 37 to the slope portion 39 and is in contact with the first drive electrode 36.

Accordingly, since the Cr film 36a is not exposed, there is no case where an oxide which interferes with conductivity is formed. It is possible to increase the contact area of the first drive electrode 36 and the first reflective film 35, and to ensure reliable electrical connection to the first reflective film 35.

As shown in Fig. 11D, the first drive electrode 36 has a Cr film 36a as an underlayer, a Ti film 36c as an intermediate layer, and an Au film 36b as an electrode layer. In the outer edge portion of the first drive electrode 36, the Ti film 36c and the Au film 36b are removed, and the Cr film 36a is exposed. The exposed Cr film 36a is in contact with the first reflective film 35.

The invention can be carried out in a first drive electrode having a laminated structure of three or more layers.

Next, the shape of the first drive electrode which can be carried out when the first drive electrode is formed in a single layer (only one layer) will be described.

Figs. 12A to 12C are schematic sectional views showing a modification example of the shape of the first drive electrode in the first embodiment.

The first drive electrode 36 is formed of a single conductive film, such as an Al film. In this case, the invention can be carried out in the following forms.

As shown in Fig. 12A, a part of the outer edge portion of the first drive electrode 36 may be deleted to form the first step portion 37.

As shown in Fig. 12B, in the outer edge portion of the first drive electrode 36, a slope portion 39 which has a slope having a gradually increasing thickness of the first drive electrode 36 from a portion (first step portion 37) having a dimension smaller than the thickness of the first reflective film 35 may be provided.

As shown in Fig. 12C, in the outer edge portion of the first drive electrode 36, a slope portion 39 which has a slope having a gradually increasing thickness of the first drive electrode 36 from the surface of the fixed substrate 30 may be provided.

In the foregoing embodiment and the modification example, although an example where both the fixed substrate 30 and the movable substrate 40 have the drive electrode and the reflective film of the same configuration has been described, both may not have the same structure, or the structure described in the first embodiment and the modification example may be combined.

Although the first drive electrode as the first connection electrode which is connected to the first reflective film and the second drive electrode as the second connection electrode which is connected to the second reflective film have been described, the invention is not limited to this example, and as a connection electrode which is connected to a reflective film, a monitoring electrode for measuring electrostatic capacitance or the like may be connected to a reflective film.

### Second Embodiment

Next, a second embodiment of the invention will be described referring to the drawings.

In the spectroscopic measurement apparatus 1 of the first embodiment, the wavelength variable interference filter 5 is provided directly in the optical module 10. However, an optical module has a complicated configuration, and in particular, it is difficult to provide the wavelength variable interference filter 5 directly in a small optical module. In this embodiment, an optical filter device in which the wavelength variable interference filter 5 can be easily provided in an optical module will be described below.

Fig. 13 is a sectional view showing the schematic configuration of an optical filter device according to the second embodiment of the invention.

As shown in Fig. 13, an optical filter device 60 includes a wavelength variable interference filter 5, and a housing 61 which stores the wavelength variable interference filter 5.

The housing 61 includes a base substrate 62, a lid 70, a base-side glass substrate 75, and a lid-side glass substrate 76.

The base substrate 62 is made of, for example, a single-layer ceramic substrate. The base substrate 62 is provided with a movable substrate 40 of the wavelength variable interference filter 5. As the installation of the movable substrate 40 on the base substrate 62, for example, the movable substrate 40 may be arranged on the base substrate 62 through an adhesive layer or the like, or the movable substrate 40 may be arranged on the base substrate 62 by engagement with a different fixing member or the like, or the like. A light passage hole 63 is formed in the base substrate 62. The base-side glass substrate 75 is bonded so as to cover the light passage hole 63. As a method of bonding the base-side glass substrate 75, for example, glass frit bonding using glass frit which is a piece of broken glass obtained by melting a glass raw material at high temperature and performing rapid cooling, or adhesion by epoxy resin or the like may be used.

On a base inner surface 64 of the base substrate 62 facing the lid 70, inner terminal portions 67 are provided corresponding to the respective electrode pads of the wavelength variable interference filter 5. The connection of the respective electrode pads and the inner terminal portions 67 may be carried out using, for example, FPC67a, and for example, Ag paste, an ACF (Anisotropic Conductive Film), ACP (Anisotropic Conductive Paste), or the like is used for bonding. The connection of the respective electrode pads and the inner terminal portions 67 is not limited to the connection by FPC67a, and for example, wiring connection by wire bonding or the like may be carried out.

In the base substrate 62, through holes 66 are formed corresponding to the positions where the respective inner terminal portions 67 are provided, and the respective inner terminal portions 67 are connected to outer terminal portions 68, which are provided on a base outer surface 65 opposite to the base inner surface 64 of the base substrate 62, through conductive members filled in the through holes 66.

In the outer circumferential portion of the base substrate 62, a base bonding portion 69 which is bonded to the lid 70 is provided.

As shown in Fig. 13, the lid 70 includes a lid bonding portion 72 which is bonded to the base bonding portion 69 of the base substrate 62, a sidewall portion 73 which is continuous from the lid bonding portion 72 and stands up in a direction away from the base substrate 62, and a top surface portion 74 which is continuous from the sidewall portion 73 and covers the fixed substrate 30 side of the wavelength variable interference filter 5. The lid 70 may be formed of, for example, an alloy or a metal, such as kovar.

The lid 70 is bonded closely to the base substrate 62 by bonding the lid bonding portion 72 and the base bonding portion 69 of the base substrate 62.

As the bonding method, for example, laser welding, soldering using silver solder or the like, sealing using an eutectic alloy layer, welding using low-melting-point glass, glass adhesion, glass frit bonding, bonding by epoxy resin, and the like are illustrated. These bonding methods may be appropriately selected by the materials of the base substrate 62 and the lid 70, the bonding environment, or the like.

The top surface portion 74 of the lid 70 is parallel to the base substrate 62. In the top surface portion 74, a light passage hole 71 is formed. The lid-side glass substrate 76 is bonded so as to cover the light passage hole 71. As a method of bonding the lid-side glass substrate 76, similarly to the bonding of the base-side glass substrate 75, for example, glass frit bonding or adhesion by epoxy resin or the like may be used.

In the optical filter device 60 of this embodiment as described above, since the wavelength variable interference filter 5 is protected by the housing 61, it is possible to prevent damage to the wavelength variable interference filter 5 by external factors.

### Third Embodiment

Next, an electronic apparatus which uses the wavelength variable interference filter described in the first embodiment will be described. In a third embodiment, for example, a colorimetric apparatus which measures chromaticity of an object to be measured will be described.

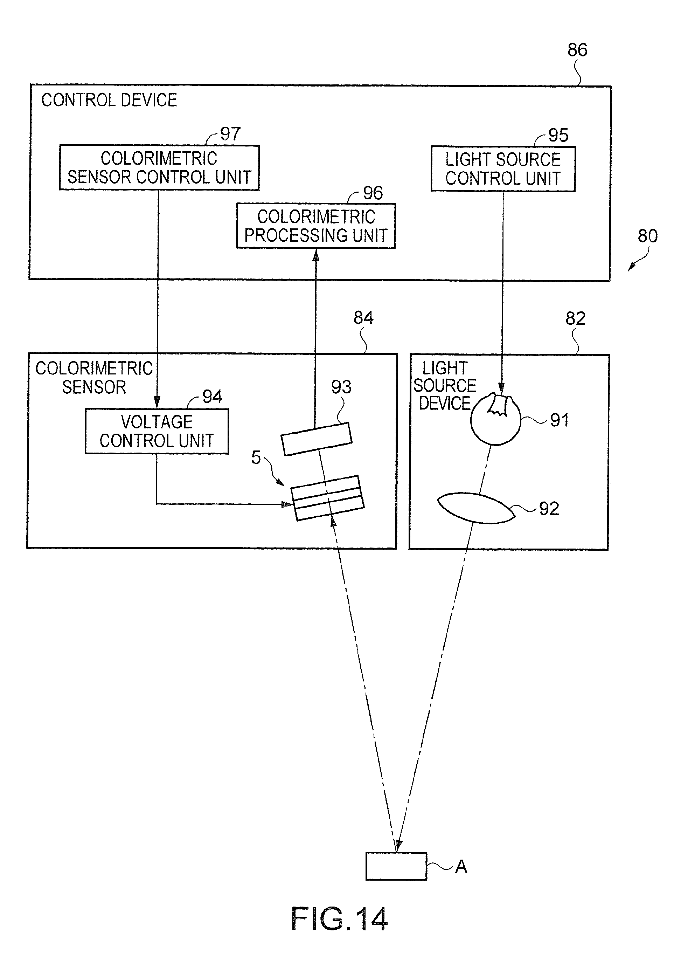

Fig. 14 is a schematic view showing the configuration of a colorimetric apparatus.

A colorimetric apparatus 80 includes a light source device 82 which irradiates light on a test object A, a colorimetric sensor 84 (optical module), a control device 86 which controls the overall operation of the colorimetric apparatus 80.

The colorimetric apparatus 80 is an apparatus which irradiates light onto the test object A from the light source device 82, receives light to be tested reflected by the test object A by the colorimetric sensor 84, and analyzes and measures chromaticity of light to be tested on the basis of a detection signal output from the colorimetric sensor 84.

The light source device 82 includes a light source 91 and a plurality of lenses 92 (in Fig. 14, only one lens is shown), and emits white light to the test object A. A plurality of lenses 92 may include a collimator lens, and in this case, the light source device 82 parallelizes light emitted from the light source 91 by the collimator lens to form parallel light, and emits parallel light from a projection lens (not shown) toward the test object A.

In this embodiment, although the colorimetric apparatus 80 including the light source device 82 is illustrated, for example, when the test object A is a light emitting member, a colorimetric apparatus may have a configuration in which the light source device 82 is not provided.

The colorimetric sensor 84 as an optical module includes the wavelength variable interference filter 5, a voltage control unit 94 which controls a voltage to be applied to the electrostatic actuator and changes the wavelength of light transmitting through the wavelength variable interference filter 5, and a light receiving unit 93 (detection unit) which receives light transmitting through the wavelength variable interference filter 5.

The colorimetric sensor 84 includes an optical lens (not shown) which guides reflected light (light to be tested) reflected by the test object A to the wavelength variable interference filter 5. The colorimetric sensor 84 disperses light to be tested entering the optical lens to light in a predetermined wavelength band by the wavelength variable interference filter 5, and the dispersed light is received by the light receiving unit 93.

The light receiving unit 93 has a photoelectric conversion element, such as a photodiode, as a detection unit, and produces an electrical signal according to the amount of received light. The light receiving unit 93 is connected to the control device 86, and outputs the produced electrical signal to the control device 86 as a light reception signal.

The voltage control unit 94 controls the voltage to be applied to the electrostatic actuator on the basis of a control signal input from the control device 86.

The control device 86 controls the overall operation of the colorimetric apparatus 80. As the control device 86, for example, a general-purpose personal computer, a portable information terminal, or colorimetry dedicated computer, or the like may be used.

The control device 86 includes a light source control unit 95, a colorimetric sensor control unit 97, a colorimetric processing unit 96 (analysis processing unit), and the like.

The light source control unit 95 is connected to the light source device 82. The light source control unit 95 outputs a predetermined control signal to the light source device 82 on the basis of a setting input of a user, and causes the light source device 82 to emit white light with predetermined brightness.

The colorimetric sensor control unit 97 is connected to the colorimetric sensor 84. For example, the colorimetric sensor control unit 97 sets the wavelength of light received by the colorimetric sensor 84 on the basis of the setting input of the user, and outputs a control signal to the effect of detecting the amount of received light having this wavelength to the colorimetric sensor 84. Accordingly, the voltage control unit 94 of the colorimetric sensor 84 sets the voltage to be applied to the electrostatic actuator on the basis of the control signal so as to transmit the wavelength of light desired by the user.

The colorimetric processing unit 96 performs control such that the colorimetric sensor control unit 97 changes the gap dimension between the reflective films of the wavelength variable interference filter 5 to change the wavelength of light transmitting through the wavelength variable interference filter 5. The colorimetric processing unit 96 acquires the amount of light transmitting through the wavelength variable interference filter 5 on the basis of the light reception signal input from the light receiving unit 93. The colorimetric processing unit 96 calculates chromaticity of light reflected by the test object A on the basis of the amount of received light having each wavelength obtained in the above-described manner.

In this way, since the colorimetric apparatus 80 as an electronic apparatus and the colorimetric sensor 84 as an optical module of this embodiment include the wavelength variable interference filter 5 which improves connection reliability of wiring, it is possible to improve reliability of the colorimetric sensor 84.

In the third embodiment, although the colorimetric apparatus 80 has been illustrated as an electronic apparatus, a wavelength variable interference filter, an optical module, and an electronic apparatus may be used in various fields.

For example, it is possible to use a light-based system for detecting the presence of a specific substance. As such a system, for example, a gas detection apparatus, such as an in-vehicle gas leakage detector which detects specific gas using a spectroscopic measurement system having a wavelength variable interference filter with high sensitivity, or a photoacoustic rare gas detector for a breath test, may be illustrated.

### Fourth Embodiment

Hereinafter, an example of a gas detection apparatus will be described below referring to the drawings.

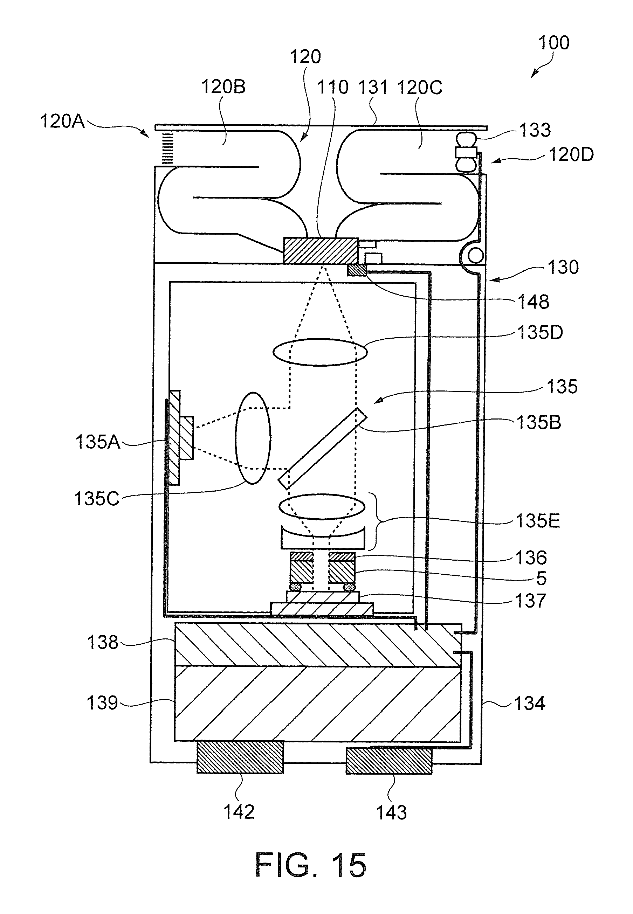

Fig. 15 is a schematic view showing an example of a gas detection apparatus having a wavelength variable interference filter.

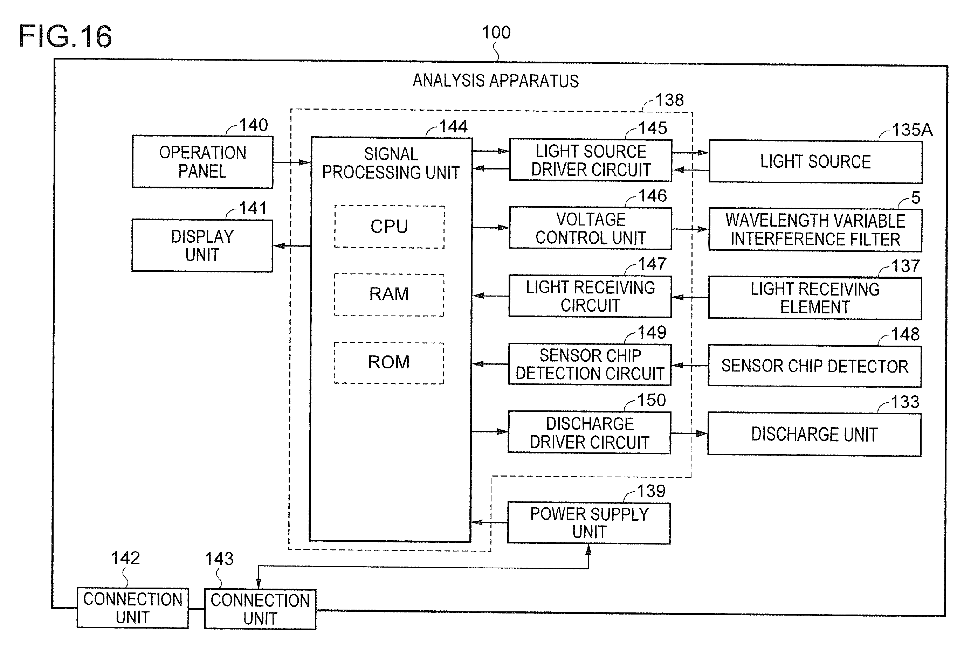

Fig. 16 is a block diagram showing a configuration of a control system of the gas detection apparatus.

As shown in Fig. 15, a gas detection apparatus 100 includes a sensor chip 110, a flow channel 120 including a suction port 120A, a suction flow channel 120B, a discharge flow channel 120C, and a discharge port 120D, and a body portion 130.

The body portion 130 includes a detection unit (optical module) which includes a sensor unit cover 131 having an opening for allowing the attachment/detachment of the flow channel 120, a discharge unit 133, a housing 134, an optical unit 135, a filter 136, a wavelength variable interference filter 5, a light receiving element 137 (light receiving unit), and the like, a control unit 138 which processes a detected signal and controls the detection unit, a power supply unit 139 which supplies power, and the like. The optical unit 135 has a light source 135A which emits light, a beam splitter 135B which reflects light entering from the light source 135A toward the sensor chip 110 and transmits light entering from the sensor chip side toward the light receiving element 137, and lenses 135C, 135D, and 135E.

As shown in Fig. 16, the gas detection apparatus 100 is provided with an operation panel 140, a display unit 141, a connection unit 142 for interface with the outside, and the power supply unit 139. When the power supply unit 139 is a secondary battery, the power supply unit 139 may include a connection unit 143 for charging.

The control unit 138 of the gas detection apparatus 100 includes a signal processing unit 144 which is constituted by a CPU or the like, a light source driver circuit 145 which controls the light source 135A, a voltage control unit 146 which controls the wavelength variable interference filter 5, a light receiving circuit 147 which receives a signal from the light receiving element 137, a sensor chip detection circuit 149 which reads a code of the sensor chip 110 and receives a signal from a sensor chip detector 148 detecting the presence/absence of the sensor chip 110, a discharge driver circuit 150 which controls the discharge unit 133, and the like.

Next, an operation of the gas detection apparatus 100 will be described below.

The sensor chip detector 148 is provided inside the sensor unit cover 131 in an upper portion of the body portion 130, and the presence/absence of the sensor chip 110 is detected by the sensor chip detector 148. When a detection signal from the sensor chip detector 148 is detected, the signal processing unit 144 determines that the sensor chip 110 is loaded, and outputs, to the display unit 141, a display signal for displaying to the effect that a detection operation is executable.

For example, if the operation panel 140 is operated by the user, and an instruction signal to the effect of starting detection processing is output from the operation panel 140 to the signal processing unit 144, first, the signal processing unit 144 outputs a source actuation signal to the light source driver circuit 145 to actuate the light source 135A. If the light source 135A is driven, stable laser light linearly polarized with a single wavelength is emitted from the light source 135A. The light source 135A is embedded with a temperature sensor and a light amount sensor, and information is output to the signal processing unit 144. If it is determined on the basis of the temperature and the amount of light input from the light source 135A that the light source 135A performs stable operation, the signal processing unit 144 performs control such that the discharge driver circuit 150 actuates the discharge unit 133. Accordingly, a gas sample including a target substance (gas molecule) to be detected is induced from the suction port 120A to the discharge port 120D through the suction flow channel 120B, inside the sensor chip 110 and the discharge flow channel 120C.

The sensor chip 110 is a sensor which has a plurality of metal nanostructurs embedded therein, and uses localized surface plasmon resonance. In the sensor chip 110, an enhanced electric field is formed between the metal nanostructures by laser light, and if a gas molecule enters the enhanced electric field, Raman scattering light including information of molecular vibration and Rayleigh scattering light are generated.

Rayleigh scattering light or Raman scattering light enters the filter 136 through the optical unit 135, Rayleigh scattering light is separated by the filter 136, and Raman scattering light enters the wavelength variable interference filter 5. The signal processing unit 144 performs control such that the voltage control unit 146 adjusts the voltage to be applied to the wavelength variable interference filter 5 and disperses Raman scattering light corresponding to a gas molecule to be detected by the wavelength variable interference filter 5. Thereafter, if the dispersed light is received by the light receiving element 137, a light reception signal according to the amount of received light is output to the signal processing unit 144 through the light receiving circuit 147.

The signal processing unit 144 compares spectrum data of Raman scattering light corresponding to the gas molecule to be detected obtained in the above-described manner with data stored in the ROM, determines whether or not the gas molecule is a target gas molecule, and specifies a substance. The signal processing unit 144 causes the display unit 141 to display result information, or outputs the result information from the connection unit 142 to the outside.

In Figs. 15 and 16, although the gas detection apparatus 100 which disperses Raman scattering light by the wavelength variable interference filter 5 and performs gas detection from the dispersed Raman scattering light has been illustrated, the gas detection apparatus may be used as a gas detection apparatus which detects absorbance specific to gas to specify a gas type. In this case, a gas sensor which causes gas to flow inside the sensor and detects light absorbed by gas out of incoming light is used as an optical module according to the invention. The gas detection apparatus 100 which analyzes and discriminates gas flowing inside the sensor by the gas sensor is an electronic apparatus according to the invention. In this configuration, it is also possible to detect a component of gas using a wavelength variable interference filter according to the invention.

A system for detecting the presence of a specific material is not limited to gas detection as described above, and a substance component analysis apparatus, such as a non-invasive measurement apparatus of saccharides by near-infrared spectroscopy, or a non-invasive measurement apparatus of information regarding foods, living bodies, minerals, and the like may be illustrated.

### Fifth Embodiment

Next, as an example of the substance component analysis apparatus, a food analysis apparatus will be described.

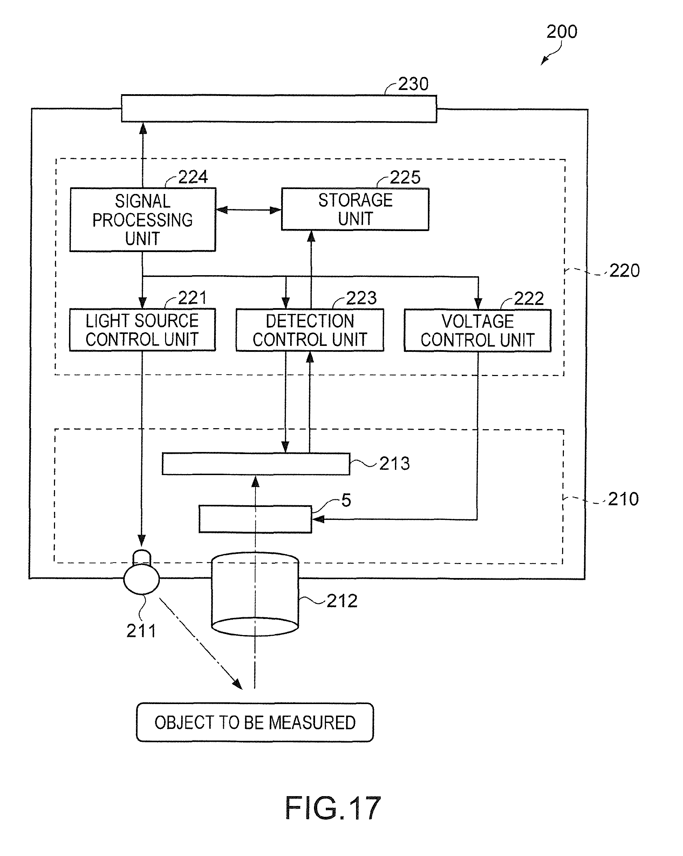

Fig. 17 is a schematic view showing a configuration of the food analysis apparatus which is an example of an electronic apparatus using the wavelength variable interference filter 5.

A food analysis apparatus 200 includes a detector (optical module) 210, a control unit 220, and a display unit 230. The detector 210 includes a light source 211 which emits light, an imaging lens 212 to which light from an object to be measured is introduced, a wavelength variable interference filter 5 which disperses light introduced from the imaging lens 212, and an imaging unit (light receiving unit) 213 which detects the dispersed light.

The control unit 220 includes a light source control unit 221 which carries out turn-on/off control of the light source 211 and control of brightness during turn-on, a voltage control unit 222 which controls the wavelength variable interference filter 5, a detection control unit 223 which controls the imaging unit 213 and acquires a spectroscopic image imaged by the imaging unit 213, a signal processing unit 224, and a storage unit 225.

In the food analysis apparatus 200, if the apparatus is driven, the light source 211 is controlled by the light source control unit 221, and light is irradiated from the light source 211 onto the object to be measured. Light reflected by the object to be measured enters the wavelength variable interference filter 5 through the imaging lens 212. A voltage enough to disperse a desired wavelength is applied to the wavelength variable interference filter 5 under the control of the voltage control unit 222, and the dispersed light is imaged by the imaging unit 213 which is constituted by, for example, a CCD camera or the like. The imaged light is accumulated in the storage unit 225 as a spectroscopic image. The signal processing unit 224 performs control such that the voltage control unit 222 changes the voltage value to be applied to the wavelength variable interference filter 5 and acquires a spectroscopic image for each wavelength.

The signal processing unit 224 performs arithmetic processing on data of each pixel in each image accumulated in the storage unit 225 and obtains a spectrum in each pixel. The storage unit 225 stores, for example, information relating to a component of a food for a spectrum, and the signal processing unit 224 analyzes data of the obtained spectrum on the basis of information relating to a food stored in the storage unit 225, and obtains a food component included in an object to be detected and the content of the food component. It is also possible to calculate food calorie, freshness, and the like from the obtained food component and content. A spectral distribution in an image is analyzed, thereby extracting a portion where freshness is lowered in a food to be tested and detecting a foreign substance included in a food.

The signal processing unit 224 performs processing for causing the display unit 230 to display information regarding the obtained component or content of the food to be tested, calorie, freshness, and the like.

In Fig. 17, although an example of the food analysis apparatus 200 is shown, the substance component analysis apparatus may be used as a non-invasive measurement apparatus of other kinds of information with the substantially same configuration. For example, the substance component analysis apparatus may be used as a biological analysis apparatus which analyzes a biological component, for example, performs the measurement and analysis of a body fluid component, such as blood. Examples of the biological analysis apparatus include an apparatus which measures a body fluid component, such as blood, and if an apparatus is configured to detect ethyl alcohol, the substance component analysis apparatus may be used as a drunken driving prevention apparatus which detects a drinking state of a driver of a vehicle. The electronic apparatus may be used as an electronic endoscope system including the biological analysis apparatus.

The substance component analysis apparatus may also be used as a mineral analysis apparatus which carries out component analysis of minerals.

A wavelength variable interference filter, an optical module, and an electronic apparatus according to the invention may be applied to the following apparatuses.

For example, the intensity of light of each wavelength changes over time to transmit data by light of each wavelength. In this case, light having a specific wavelength is dispersed by a wavelength variable interference filter provided in an optical module, and is received by a light receiving unit, thereby extracting data to be transmitted by light having a specific wavelength. Data of light of each wavelength is processed by an electronic apparatus including an optical module for data extraction, thereby carrying out optical communication.

### Sixth Embodiment

The invention may be applied to other electronic apparatuses, for example, a spectroscopic camera which disperses light by a wavelength variable interference filter according to the invention and images a spectroscopic image, a spectrometer, and the like. As an example of such a spectroscopic camera, an infrared camera embedded with a wavelength variable interference filter is illustrated.

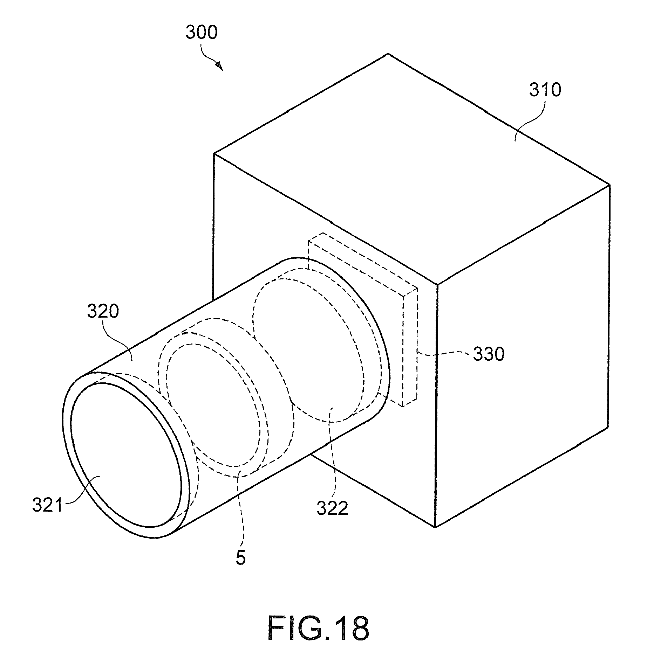

Fig. 18 is a perspective view showing the configuration of a spectroscopic camera. As shown in Fig. 18, a spectroscopic camera 300 includes a camera body 310, an imaging lens unit 320, and an imaging unit 330.

The camera body 310 is a portion which is held and operated by the user.

The imaging lens unit 320 is provided in a camera body 310, and guides incoming image light to the imaging unit 330. The imaging lens unit 320 includes an objective lens 321, an imaging lens 322, and a wavelength variable interference filter 5 provided between these lenses.

The imaging unit 330 is constituted by a light receiving element, and images image light guided by the imaging lens unit 320.

In the spectroscopic camera 300, light having a wavelength to be imaged transmits through the wavelength variable interference filter 5, thereby imaging a spectroscopic image of light having a desired wavelength.

A wavelength variable interference filter according to the invention may be used as a band-pass filter, and for example, may be used as an optical laser apparatus which disperses and transmits only narrowband light centering on a predetermined wavelength out of light in a predetermined wavelength band emitted from a light emitting element.

A wavelength variable interference filter according to the invention may be used as a biological authentication apparatus, and may be applied to, for example, an authentication apparatus of a blood vessel, a fingerprint, a retina, an iris, or the like using light of a near-infrared region or a visible region.

An optical module and an electronic apparatus may be used as a concentration detection apparatus. In this case, infrared energy (infrared light) emitted from a substance is dispersed and analyzed by a wavelength variable interference filter to measure a subject concentration in a sample.

As described above, a wavelength variable interference filter, an optical module, and an electronic apparatus according to the invention may be applied to any apparatus which disperses predetermined light from incoming light. As described above, since a wavelength variable interference filter according to the invention can disperse a plurality of wavelengths by a single device, it is possible to carry out the measurement of the spectrum of a plurality of wavelengths and the detection of a plurality of components with high precision. Accordingly, compared to a related art apparatus which extracts a desired wavelength by a plurality of devices, it is possible to advance reduction in size of an optical module or an electronic apparatus, and to suitably use a wavelength variable interference filter, an optical module, and an electronic apparatus according to the invention for portable and in-vehicle apparatuses.

The invention is not limited to the embodiments described above, and a specific structure and procedure when carrying out the invention may be appropriately changed to other structures or the like within the scope capable of attaining the object of the invention. Then, many modification examples may be made by a person having ordinary skill in the art within the technical idea of the invention.

## Claims

1. A wavelength variable interference filter comprising:
a first substrate;
a second substrate which is arranged to face the first substrate;
a first reflective film which is provided on the first substrate;
a second reflective film which is provided on the second substrate and is arranged to face the first reflective film;
a first connection electrode which is provided on the first substrate and is electrically connected to the first reflective film on the first substrate; and
a second connection electrode which is provided on the second substrate and is electrically connected to the second reflective film on the second substrate,
wherein the thickness of the first connection electrode is greater than the thickness of the first reflective film,
the thickness of the second connection electrode is greater than the thickness of the second reflective film,
the first connection electrode has a first step portion having a thickness smaller than the thickness of the first reflective film in an end portion connected to the first reflective film,
the second connection electrode has a second step portion having a thickness smaller than the thickness of the second reflective film in an end portion connected to the second reflective film,
the first reflective film is formed to extend from the surface of the first substrate to the surface of the first step portion, and
the second reflective film is formed to extend from the surface of the second substrate to the surface of the second step portion.

2. The wavelength variable interference filter according to claim 1,
wherein the first connection electrode or the second connection electrode is formed by laminating a plurality of conductive films, and a part of the conductive film below the surface of the first connection electrode or the second connection electrode is exposed in the end portion of the first connection electrode or the second connection electrode.

3. The wavelength variable interference filter according to claim 2,
wherein a slope portion which has a slope having a gradually increasing thickness of the conductive film from the first step portion or the second step portion is provided, and
the first reflective film or the second reflective film extends from the first step portion or the second step portion to the slope portion.

4. The wavelength variable interference filter according to any of claims 1-3,
wherein the first connection electrode or the second connection electrode is formed of a single conductive film.

5. The wavelength variable interference filter according to claim 4,
wherein a slope portion which has a slope having a gradually increasing thickness of the conductive film from the first step portion or the second step portion is provided, and
the first reflective film or the second reflective film extends from the first step portion or the second step portion to the slope portion.

6. The wavelength variable interference filter according to any of claims 1-5,
wherein the second substrate includes
a movable portion which is provided with the second reflective film, and
a holding portion which is provided outside the movable portion in plan view when the second substrate is viewed
in a substrate thickness direction, has a thickness smaller than the thickness of the movable portion, and retreatably holds the movable portion.

7. A wavelength variable interference filter comprising:
a reflective film which reflects a part of incoming light and transmits a part of incoming light; and
a connection electrode which is electrically connected to the reflective film,
wherein a step portion which has a thickness smaller than the thickness of the reflective film is provided in an end portion of the connection electrode connected to the reflective film, and
the reflective film is in contact with the surface of the step portion of the connection electrode in an overlapping manner.

8. An optical filter device comprising:
a wavelength variable interference filter according to any of claims 1 to 7, and
a housing which stores the wavelength variable interference filter.

9. An optical module comprising:
a first substrate;
a second substrate which is arranged to face the first substrate;
a first reflective film which is provided on the first substrate;
a second reflective film which is provided on the second substrate and is arranged to face the first reflective film;
a first connection electrode which is provided on the first substrate and is electrically connected to the first reflective film on the first substrate;
a second connection electrode which is provided on the second substrate and is electrically connected to the second reflective film on the second substrate; and
a detection unit which detects light extracted by the first reflective film and the second reflective film,
wherein the thickness of the first connection electrode is greater than the thickness of the first reflective film,
the thickness of the second connection electrode is greater than the thickness of the second reflective film,
the first connection electrode has a first step portion having a thickness smaller than the thickness of the first reflective film in an end portion connected to the first reflective film,
the second connection electrode has a second step portion having a thickness smaller than the thickness of the second reflective film in an end portion connected to the second reflective film,
the first reflective film is formed to extend from the surface of the first substrate to the surface of the first step portion, and
the second reflective film is formed to extend from the surface of the second substrate to the surface of the second step portion.

10. An electronic apparatus comprising:
a wavelength variable interference filter according to any of claims 1 to 7, and
a control unit which controls the wavelength variable interference filter.
